Europäisches Patentamt

**European Patent Office**

**Office européen des brevets**

(19)

(11) Numéro de publication : **0 017 922**
**B1**

(12)

# FASCICULE DE BREVET EUROPÉEN

(45) Date de publication du fascicule du brevet :
**01.06.83**

(21) Numéro de dépôt : **80101934.0**

(22) Date de dépôt : **10.04.80**

(51) Int. Cl.³ : **G 02 F   1/133//** G02B5/02,
F21V5/00

(54) **Structure de surface diffusante pour un guide de lumière de dispositif d'affichage d'informations.**

(30) Priorité : **13.04.79 FR 7910414**

(43) Date de publication de la demande :
**29.10.80 Bulletin 80/22**

(45) Mention de la délivrance du brevet :
**01.06.83 Bulletin 83/22**

(84) Etats contractants désignés :
**CH DE GB LI**

(56) Documents cités :
**CH A 608 165**
**DE A 2 744 034**
**FR A 1 285 829**
**FR A 2 181 010**
**FR A 2 317 720**
**FR A 2 353 920**
**GB A 118 269**
**GB A 851 217**
**US A 3 840 695**
**US A 4 043 636**
**IBM TECHNICAL DISCLOSURE BULLETIN vol. 15,
no. 8, janvier 1973 New York US W.R. YOUNG :
« Combination    reflective/transmissive    liquid
crystal display », pages 2435-2436**

(73) Titulaire : **SOCIETE SUISSE POUR L'INDUSTRIE
HORLOGERE MANAGEMENT SERVICES S.A.
Rue Stämpfli 96
CH-2500 Bienne (CH)**

(72) Inventeur : **Jaccard, Pierre-Ernest
Chemin Ritter 15
CH-2502 Bienne (CH)**

(74) Mandataire : **Coutts, William Robert
SSIH Management Services S.A. Patent Service Rue
Stämpfli 96
CH-2500 Bienne (CH)**

Jouve, 18, rue St-Denis, 75001 Paris, France

# Structure de surface diffusante pour un guide de lumière de dispositif d'affichage d'informations

L'invention est relative au domaine des instruments à affichage d'informations, tels que par exemple les montres, calculatrices à main, tableaux de bord de véhicules, et plus particulièrement au dispositif d'affichage lui-même.

La tendance actuelle dans ce domaine est l'adoption d'affichages passifs, en particulier à cristaux liquides. Leur caractère passif tient au fait qu'ils n'émettent eux-mêmes pas de lumière et sont donc invisibles et par suite illisibles dans l'obscurité. Il est donc nécessaire de disposer de moyens d'illumination de l'affichage, comme une lampe à incandescence, une diode électroluminescente ou un matériau phosphorescent activé par du tritium.

Dans le cas de petits instruments portatifs tels que les montres, il est essentiel d'économiser l'énergie, donc de rechercher le maximum d'efficacité dans l'illumination de l'affichage. Différents systèmes ont été proposés pour guider la lumière émise par la source en utilisant des phénomènes de réflexion et de réfraction, et pour la diffuser au niveau d'une surface placée sous l'affichage selon un angle approprié à la vision par l'utilisateur. Ces guides sont en général essentiellement constitués par une plaquette mince dont une grande face est dotée d'une structure destinée à diffuser la lumière. Ces structures de surface connues peuvent être classées en deux groupes distincts présentant chacun ses inconvénients propres.

Le premier groupe rassemble les structures à caractère aléatoire obtenues par des procédés présentant eux-mêmes ce caractère aléatoire, comme par exemple le sablage ou l'attaque chimique de la surface. Elles présentent généralement une texture fine dont le grain n'est pas discernable à l'œil nu. Cependant, elles ont l'inconvénient majeur que tous les petits défauts, comme par exemple les poussières, présents dans le système optique d'affichage, sont nettement visibles par l'observateur, ce qui est non seulement extrêmement gênant pour la lecture, mais nuit grandement à l'esthétique. Un exemple d'une telle structure de surface diffusante est décrit dans le brevet CH 589 306.

Le second groupe rassemble les structures à caractère périodique ou régulier obtenues par des procédés de type répétitif comme par exemple un usinage mécanique. Ces structures présentent généralement une texture grossière mais régulière et parfaitement visible à l'œil nu. Elles n'ont pas l'inconvénient évoqué plus haut à propos du premier groupe, mais en présentent un autre qui est de ne diffuser la lumière en provenance du guide que dans certaines directions particulières avec des angles d'ouverture très restreints et insuffisants pour couvrir un angle de vision nécessaire à une lecture aisée.

L'invention vise à s'affranchir des inconvénients du premier groupe par l'adoption d'une structure régulière, donc du second groupe, mais en évitant cependant l'inconvénient propre aux structures connues de ce groupe et qui vient d'être évoqué, tout en présentant cependant les avantages de ce groupe. Elle emploie à cet effet des portions de surfaces cylindriques à sections transversales circulaires qui permettent de produire une diffusion continue de la lumière utile dans tout l'angle de vision.

L'invention est exposée en détail dans la description qui suit et pour l'intelligence de laquelle on se référera aux dessins, parmi lesquels :

les figures 1 et 2 illustrent toutes deux l'état de la technique connu avec une structure régulière,

la figure 3 montre un premier exemple de surface selon l'invention,

la figure 4 en montre le profil en coupe,

la figure 5 illustre un second exemple de réalisation,

la figure 6 présente en coupe un autre profil selon l'invention,

la figure 7 montre en plan un troisième exemple de réalisation.

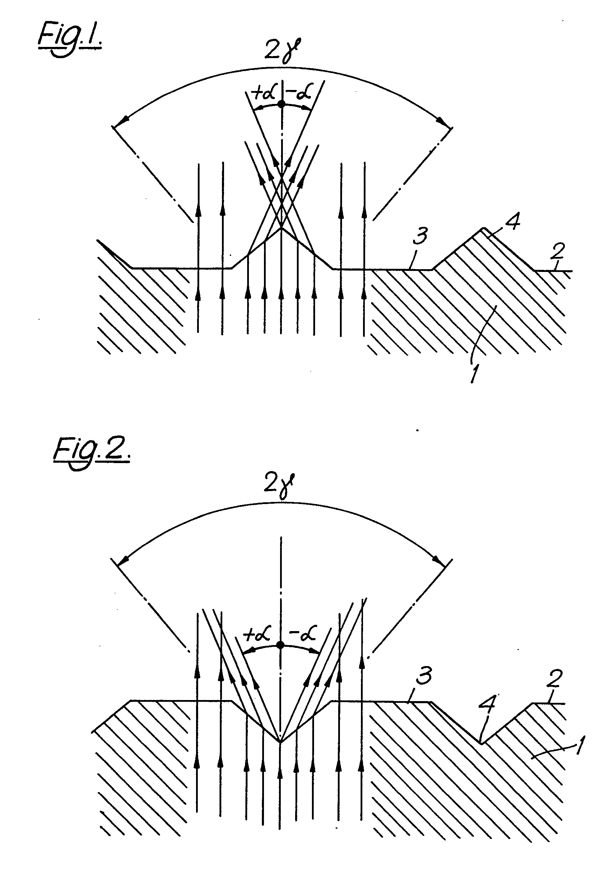

Pour faciliter la compréhension de l'invention, il est utile de revenir sur l'état de la technique le plus proche connu (structure régulière) illustré par les figures 1 et 2 de la présente demande (comme p. ex. décrit dans le brevet US 4 043 636). On voit que la surface 2 d'un guide de lumière 1 diffuseur-réflecteur de système optique d'affichage est généralement constituée de facettes planes 3 délimitées par des arêtes ou gorges de section triangulaire 4 obtenues par usinage de la surface supérieure de la plaquette 1 qui sert de guide de lumière. Les structures ainsi obtenues présentent, comme déjà dit, l'inconvénient de diffuser la lumière en provenance de la source et véhiculée par le guide, sélectivement dans des directions privilégiées particulières d'angles $+ \alpha$ et $- \alpha$. Pour permettre une perception, donc une lecture, agréable, la lumière utile à l'éclairage d'un affichage doit être continûment diffusée dans l'angle $2 \gamma$ de vision par l'observateur, ce qui n'est pas le cas dans l'état de la technique connu.

La structure de surface diffusante selon l'invention présente les avantages de la précédente, c'est-à-dire que les défauts du guide, tels que des poussières, ne sont pas visibles, mais remédie à ses inconvénients dus à un angle d'ouverture trop réduit. En effet, la structure proposée par l'invention permet l'obtention d'une diffusion continue dans tout l'angle de vision $2 \gamma$ de la lumière utile à l'éclairage d'un affichage lisible en lecture nocturne. En outre, elle donne un aspect texturé régulier au fond de l'affichage, ce qui masque les défauts déjà évoqués, et est en outre approprié à une réflexion diffuse de la lumière ambiante pour la lecture diurne.

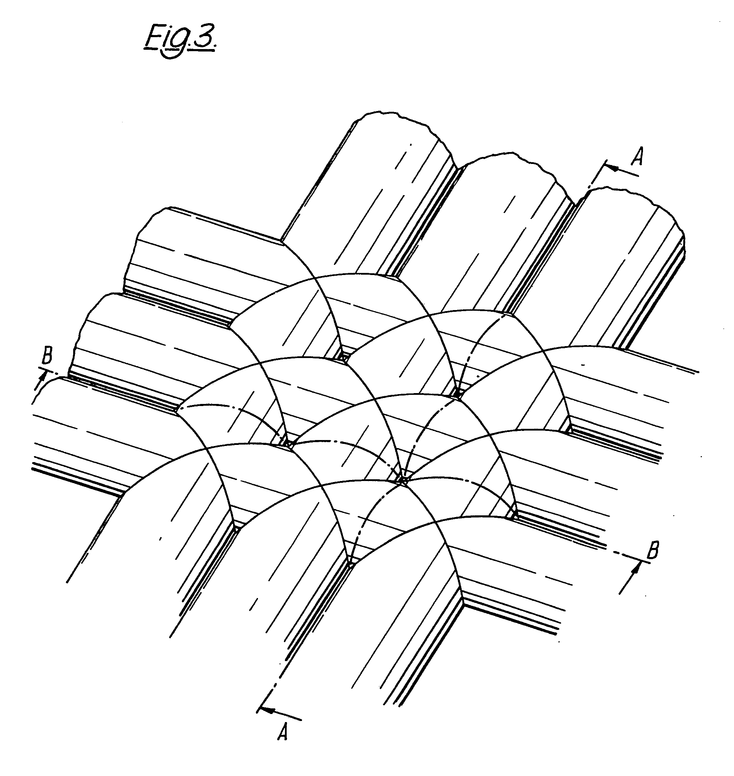

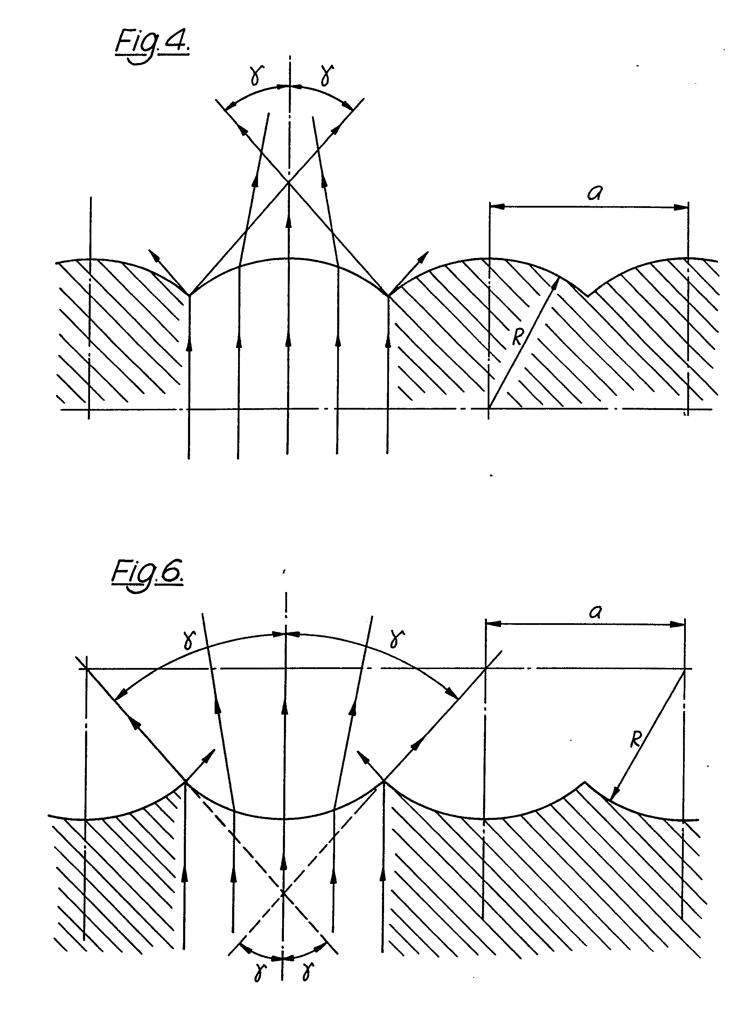

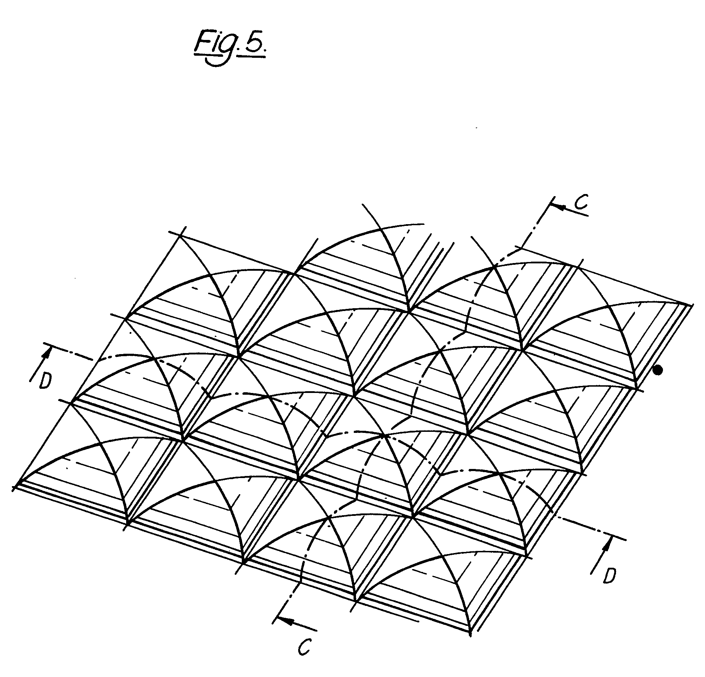

L'invention est caractérisée par l'emploi de portions de surfaces non plus planes, mais cylindriques de sections circulaires. La figure 3 en montre un premier exemple. On est en présence ici d'un réseau croisé de deux familles de surfaces cylindriques en relief, de rayon R et entreaxes a, se coupant à 90°. Une section de cette structure de surface par les plans A-A et B-B présente un profil représenté à la figure 4. Un second exemple est illustré par la figure 5. Une section par les plans C-C et D-D présente le même profil représenté à la figure 4. Il s'agit ici encore de portions de surfaces cylindriques circulaires en relief se coupant à 90°, mais les deux familles de surfaces se joignent différemment de celles de l'exemple illustré à la figure 3. La figure 6 présente un autre profil de surface qui peut être utilisé dans un réseau de familles de surfaces cylindriques en creux. Les profils de surface des figures 4 et 6 sont complémentaires et parfaitement utilisables tant l'un que l'autre selon l'invention. Le résultat, quant à l'aspect final, sera toutefois légèrement différent du fait que l'on a dans le premier cas des interfaces optiquement convergents, alors que dans le second cas, on est en présence d'interfaces optiquement divergents.

L'obtention de telles structures de surface diffusante fait appel essentiellement aux techniques connues de moulage par injection de matériaux transparents, telles certaines résines acryliques, dans un moule dont la surface aura la structure complémentaire de celle qu'on veut obtenir. Les structures représentées aux figures 3 et 5 pourraient tout aussi valablement être celles du moule d'injection soit en relief, soit en creux. Les structures obtenues sur la pièce moulée seront alors les complémentaires de celles du moule, différentes des représentations de figures 3 et 5. Il y a complémentarité entre les deux types de profils de surface des figures 4 et 6, l'un représentant celui du moule de l'autre et réciproquement.

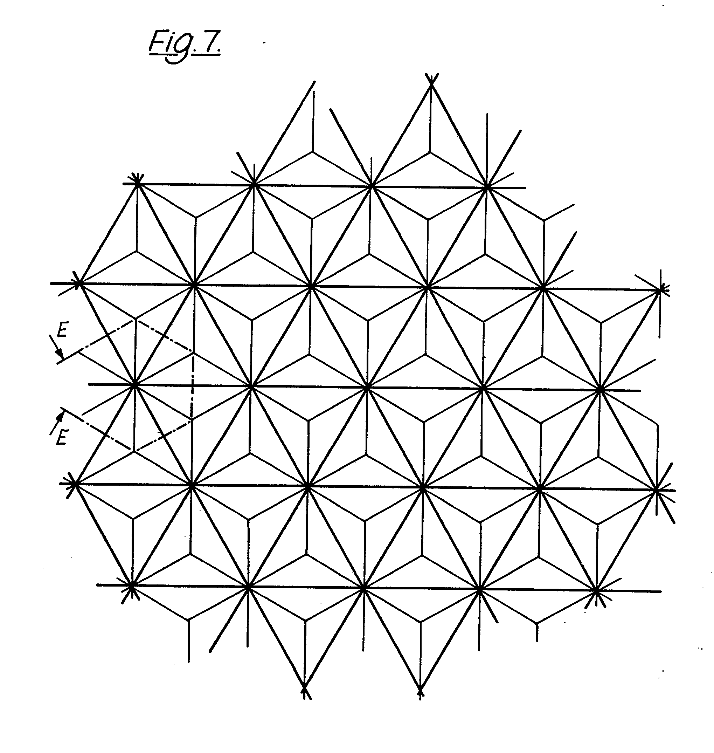

La figure 7 représente en plan un autre exemple d'exécution selon l'invention. Selon la coupe partielle E-E, on a le même profil de surface qu'aux figures 4 ou 6. La différence par rapport aux représentations des figures 3 et 5 tient au fait qu'il s'agit ici d'un réseau de surfaces cylindriques circulaires à trois directions se coupant à 60°.

Les paramètres géométriques définissant le profil choisi pour la surface diffusante du guide sont au nombre de trois : R, rayon des portions de surfaces cylindriques circulaires, a, pas ou distance séparant les axes de deux cylindres contigus et $2\gamma$, correspondant à l'angle maximal de diffusion de la lumière en provenance du guide, et angle de vision désiré. Ces paramètres sont choisis pour une vision correcte et une finesse suffisante de la texture de la structure diffusante utilisée. Ils sont liés par la relation :

$$\gamma = \text{Arc sin}(n_1/n_0 \cdot a/2\,R) - \text{Arc sin}(a/2\,R)$$

$n_1$ étant l'indice de réfraction de la matière constituant le guide de lumière pour la lumière utilisée et $n_0$ l'indice de réfraction du milieu extérieur, soit 1,00 pour l'air.

On constate évidemment que, pour qu'il y ait effectivement émergence de lumière, il est nécessaire que :

$$n_1/n_0 \cdot a/2\,R \leqslant 1 \quad \text{soit : } a/2\,R \leqslant n_0/n_1,$$

et l'angle de diffusion $2\gamma$ est maximal lorsque $a/2\,R = n_0/n_1$.

Pour un bel aspect de la structure, a peut être choisi entre 0,10 et 1 mm et une bonne vision est assurée avec $\gamma$ supérieur ou égal à 40°.

Dans un exemple de réalisation d'une surface selon l'invention, le guide étant en polyméthacrylate de méthyle (PMMA) d'indice $n_1 = 1,491$ et en contact avec de l'air, l'angle $\gamma$ maximal que l'on puisse obtenir est de 47,88°. Si on prend un pas a de 0,25 mm et un rayon R de 0,188 mm, on obtient $\gamma = 40,79°$ et donc un angle de vision $2\gamma$ approximativement égal à 81,5°, ce qui satisfait parfaitement aux exigences posées.

D'autres valeurs des paramètres géométriques pourront bien évidemment être choisies, notamment si l'on adopte d'autres matériaux pour réaliser le guide de lumière.

## Revendications

1. Structure de surface diffusante pour un guide de lumière de dispositif d'affichage passif d'informations, caractérisée par le fait qu'elle est constituée par des portions de surfaces cylindriques contiguës de sections transversales circulaires et d'axes parallèles au plan général de la surface, ces surfaces appartenant à au moins deux familles d'axes parallèles entre eux dans chaque famille et non parallèles à ceux d'une autre famille.

2. Structure de surface diffusante selon la revendication 1, caractérisée par le fait que les surfaces cylindriques se présentent en relief ou en creux selon deux familles d'axes parallèles entre eux dans chaque famille, régulièrement espacés et orthogonaux à ceux de la seconde.

3. Structure de surface diffusante selon la revendication 1, caractérisée par le fait que les surfaces cylindriques se présentent en relief ou en creux selon trois familles d'axes parallèles entre eux dans chaque famille, régulièrement espacés, et coupant ceux des autres familles à 60°.

4. Structure de surface diffusante selon l'une quelconque des revendications 1 à 3, caractérisée par le fait que les surfaces cylindriques ont toutes le même rayon.

5. Structure de surface diffusante selon l'une quelconque des revendications 1 à 4, caractérisée par le fait qu'elle est réalisée par moulage.

6. Structure de surface diffusante selon la revendication 5, caractérisée par le fait qu'elle est réalisée en polyméthacrylate de méthyle (PMMA).

## Claims

1. A surface of generally planer form having a diffusing surface structure for a light guide in a passive information display, characterized in that said diffusing surface structure being formed of portions of contiguous cylindrical surfaces of circular cross sections having their axes parallel to the general plane, said cylindrical surfaces being arranged to belong to at least two families with axes parallel to one another among the surfaces of each family and non-parallel to the axes of surfaces of another family.

2. A surface as set forth in claim 1, characterized in that said cylindrical surfaces are convex or concave in accordance with two families of axes regularly spaced, and the axes of each family being orthogonal to those of the other family.

3. A surface as set forth in claim 1, characterized in that said cylindrical surfaces are convex or concave in accordance with three families having axes parallel to one another in each family regularly spaced and cutting those of the other families at 60°.

4. A surface as set forth in any of claims 1-3, characterized in that all cylindrical surfaces have the same radius of curvature.

5. A surface as set forth in any of claims 1-4, characterized in that the surface is formed by plastic moulding.

6. A surface as set forth in claim 5, characterized in that the plastic comprises polymethyl methacrylate (PMMA).

**Ansprüche**

1. Streuende Oberflächenstruktur für einen Lichtleiter in einer passiven Informationsanzeigevorrichtung, dadurch gekennzeichnet, dass sie durch zylindrische anstossende Oberflächenfragmente mit kreisförmigen querlaufenden Querschnitten und zur Hauptebene parallelen Achsen gebildet wird, wobei diese Oberflächen mindestens zwei Familien untereinander parallelen und zu einer anderen Familie nicht parallelen Achsen angehören.

2. Streuende Oberflächenstruktur nach Anspruch 1, dadurch gekennzeichnet, dass die zylindrischen Oberflächen konvex oder konkav erscheinen gemäss zweier Familien von untereinander parallelen, in regelmässigen Abständen angeordneten Achsen, die zu denjenigen der anderen Familie senkrecht stehen.

3. Streuende Oberflächenstruktur nach Anspruch 1, dadurch gekennzeichnet, dass die zylindrischen Oberflächen konvex oder konkav erscheinen gemäss dreier Familien von untereinander parallelen, in regelmässigen Abständen angeordneten Achsen, die diejenigen der zwei anderen Familien in einem Winkel von 60° schneiden.

4. Streuende Oberflächenstruktur nach einem der Ansprüche 1-3, dadurch gekennzeichnet, dass die zylindrischen Oberflächen den gleichen Krümmungsradius haben.

5. Streuende Oberflächenstruktur nach einem der Ansprüche 1-4, dadurch gekennzeichnet, dass sie durch Guss hergestellt wird.

6. Streuende Oberflächenstruktur nach Anspruch 5, dadurch gekennzeichnet, dass sie aus Methyl Polymethakrylat (PMMA) hergestellt wird.

_Fig.1._

$2\gamma$

$+\alpha$ $-\alpha$

3
4
2
1

_Fig.2._

$2\gamma$

$+\alpha$ $-\alpha$

3
2
4
1

_Fig.3._

_Fig.4._

_Fig.6._

*Fig.5.*

_Fig.7._